# EUROPEAN PATENT APPLICATION

(11) **EP 1 073 304 A1**
(43) Date of publication of application: **31.01.2001**
(21) Application number: 99401935.4
(22) Date of filing: 28.07.1999
(51) Int. Cl.: H04Q 7/38

(54) **Calling party notification service and service centre**

(71) Applicant: ALCATEL, 75008 Paris (FR)
(72) Inventor: Broos, Rudi, 2910 Essen (BE)
(74) Representative: Plas, Axel

(57) **Abstract**

If a call is set-up from a fixed or mobile originating terminal (OT) to a mobile destination terminal (DT), it is checked whether the mobile destination terminal (DT) is roaming abroad. If so, establishment of the call is temporarily interrupted and the originating terminal (OT) is informed that the mobile destination terminal (DT) is roaming abroad. The originating terminal (OT) thereupon may indicate whether it wishes to further establish the call or not.

## Description

The present invention relates to a calling party notification service as defined in the non-characteristic part of claim 1, a service centre as defined in the non-characteristic part of claim 2, a fixed or mobile originating terminal as defined in the non-characteristic part of claim 6, and a mobile communications system as defined in the non-characteristic part of claim 8.

Such a calling party notification service and related equipment are already well-known in the art. Indeed, a traditional voice mail service in a mobile communications system can be used to inform a calling party that the called mobile destination terminal is roaming and to avoid that high conversation costs have to be paid for an international call that is unimportant or irrelevant. The user of the mobile destination terminal thereto has to record a message informing calling parties that he/she is residing abroad. If the user does not activate the voice mail service or does not switch off the mobile destination terminal, no calling party is aware that the user is abroad and any call to the mobile destination terminal will be established. A lot of calls however are only relevant to be set up in case the called person is in the neighbourhood. A request to go out for a drink for example does not need to be asked if one knows that the called person is abroad. To avoid having to pay conversation costs for international calls that are unimportant or irrelevant, the user thus activates his/her voice mail service as a result of which he/she becomes directly unreachable also for important or relevant calls. This is so because each incoming call is automatically guided to the voice mailbox. Furthermore, the voice mail service has to be activated each time entering a roaming area and has to be de-activated each time returning from a roaming area which requires a certain discipline from the user. In addition, the recorded spoken message has to be updated regularly to be informative for the calling party. This makes the traditional voice mail service rather inconvenient to notify to calling parties that a destination mobile terminal is roaming abroad and to avoid conversation costs for an international call in case the call is unimportant or irrelevant. Such a traditional voice mail service integrated in a mobile communications system for example is described in *European Patent Application EP 0 481 683 entitled 'Method of Voice Mail Notification for Cellular Telephone Systems'*, and advantageous implementations of a traditional voice mail service reducing international voice transport costs for a roaming subscriber that accesses messages in his/her voice mailbox are described respectively in *European Patent Application EP 0 820 181 entitled 'System and Method for Providing a Message System Subscriber with a Roaming Mailbox'*, and *European Patent Application EP 0 862 282 entitled 'Method of Providing a Voice Mail Service for Mobile Subscribers in a Telephone Network'.*

An object of the present invention is to provide a calling party notification service and related equipment similar to the above described one, but which does not make the destination mobile terminal unreachable directly while it is roaming abroad, and which is more user-friendly for the user of the mobile destination terminal that is roaming abroad in a sense that it does not require a strict discipline and/or regular update of recorded spoken messages.

According to the invention, this object is achieved by the calling party notification service defined by claim 1, the service centre defined by claim 2, the fixed or mobile originating terminal defined by claim 6, and the mobile communications system defined by claim 8.

Indeed, if establishment of a call towards a mobile destination terminal that is roaming abroad is temporarily interrupted and the calling party is informed that the destination mobile terminal is roaming abroad, the calling party has the possibility to hook on and to stop further establishment of the call before any international conversation costs are incurred to any of the parties. According to the present invention, a call that is irrelevant in case the called party is abroad, such as an invitation for an evening out, can be avoided whereas the mobile terminal that is roaming abroad remains directly reachable for relevant calls. The user of the mobile destination terminal does not have to activate the calling party notification service each time he/she enters a roaming area and to de-activate the service when he/she returns from a roaming area. The calling party notification service may be activated once by the user, or may alternatively be activated automatically when a roaming area is entered. The user also does not have to record and update any message informing calling parties since the message may be a standard one that remains unmodified and is equal for all subscribers.

It is noticed that also *United States Patent US 5,506,894 entitled 'System for Processing Calling Party Information for International Communications Services'* describes a service of informing a first party to a conversation concerning the location of a second party to the conversation. In US 5,506,894 however, the called party is informed automatically about the country from where the call is originating so that customised services can be tailored for the foreign caller. The service described in US 5,506,894 in other words enables the called party to greet the caller in the caller's native language, but does not enable to make a caller aware that a mobile destination is roaming abroad before any call is established.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional feature of the service centre for calling party notification according to the present invention is defined by claim 3.

Thus, in a preferred embodiment of the present invention, the calling party may be requested to explicitly indicate whether it desires to establish the call or not, after it has been informed that the called party is roaming abroad. Alternatively however, the call may be established automatically after establishment of the call has been interrupted for a certain time interval wherein the calling party has been informed that the called party is roaming abroad and wherein the calling party has been given the time to hook on. In the latter embodiment of the current invention, the call will be established automatically unless the calling party hooks on in time.

A fixed or mobile terminal that is able to communicate with the service centre of claim 3, i.e. that is able to receive and answer a request to indicate that a call has to be established via signalling that is understood by the service centre of claim 3, is claimed in claim 7.

Another additional feature of the service centre according to the present invention is defined by claim 4.

Thus, in a preferred embodiment of the present invention, the user of a mobile terminal can activate and de-activate the calling party notification service, and activation or de-activation is maintained by a kind of database in a dedicated server. Once activated, the calling party notification service will monitor each incoming call and inform the calling party each time a call comes in at a moment whereon the mobile destination terminal is located in a roaming area. Alternatively, the calling party notification service according to the present invention may be activated for the lifetime of the subscription by the mobile operator, or may be activated automatically, i.e. without instruction from the subscriber, each time a roaming area is entered and de-activated automatically each time the mobile terminal returns from a roaming area.

A mobile terminal that is able to communicate with the service centre of claim 4, i.e. that is able to activate and de-activate the calling party notification service via signalling that is understood by the service centre of claim 4, is claimed in claim 5.

The above mentioned and other objects and features of the invention will become more apparent and the invention itself will be best understood by referring to the following description of an embodiment taken in conjunction with the accompanying drawings wherein:
Fig. 1 illustrates the different steps in an implementation of the calling party notification service according to the present invention; and
Fig. 2 represents a functional block scheme of an embodiment of the service centre SERVER for calling party notification according to the present invention.

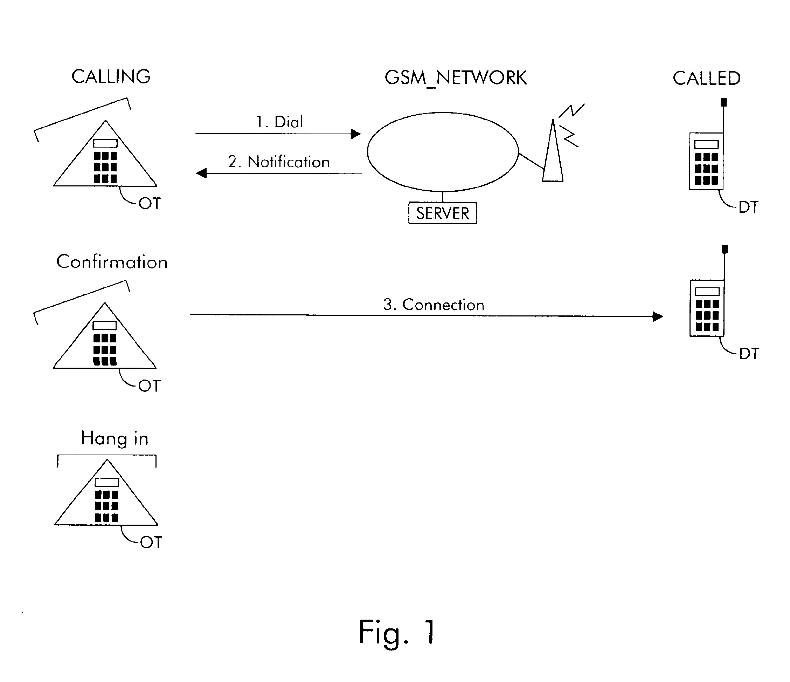

In Fig. 1, a call is set-up from a fixed originating terminal OT of a public telephone system network (PSTN) to a mobile destination terminal DT of a mobile communications network GSM_NETWORK. The public switched telephone network (PSTN) is not drawn in Fig. 1. In the mobile communications network GSM_NETWORK, a calling party notification service centre SERVER is integrated.

In step 1, the calling party CALLING dials the number of the destination terminal DT to set-up a call with the called party CALLED. At the moment the call is set-up the destination terminal DT is supposed to be roaming abroad. The mobile destination terminal DT in other words is residing in the coverage area of a mobile operator that has a roaming agreement with the mobile operator where the called party CALLED has subscribed to. Typically, this occurs when the called party CALLED is in another country than the country wherein the mobile operator where he/she subscribed to is operating. The service centre SERVER detects that the mobile destination terminal DT is roaming abroad and notifies this in step 2 to the calling party CALLING so that the calling party CALLING becomes aware that international conversation costs will have to be paid in case the connection with the destination terminal DT is established. To notify the calling party CALLING, the service centre SERVER sends an audible message to the originating terminal OT. Alternatively, a message displayable on the fixed terminal OT may be sent. In addition the service centre SERVER requests the calling party CALLING, again via an audible message or a message displayable on the fixed originating terminal OT, to indicate whether the call still has to be established now that the calling party CALLING is aware of the fact that the destination terminal DT is roaming abroad. The response to this question may be 'yes'or'no' which can be indicated by either pushing the 1-button or the 0-button on the fixed terminal OT. In case the calling party CALLING pushes the 1-button on the originating terminal OT, set-up of the call is confirmed and the mobile communications network GSM_NETWORK will complete establishment of the connection with the destination terminal DT. This is illustrated by step 3 in Fig. 1. On the contrary, if the calling party CALLING pushes the 0-button of the originating terminal OT or hooks on, no connection will be established with the destination terminal DT. This is illustrated at the bottom of Fig. 1 where the calling party CALLING hung in the telephone.

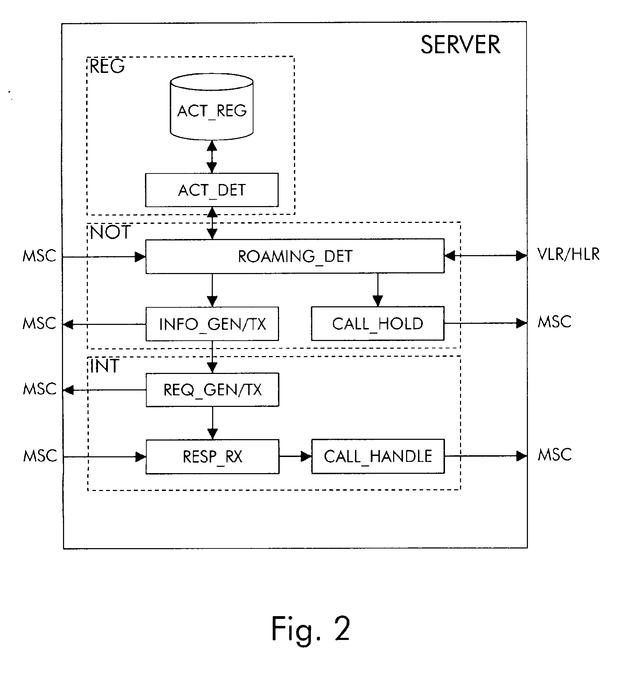

The functional blocks of the service centre SERVER of Fig. 1 enabling it to perform the just described calling party notification, are drawn in Fig. 2. The service centre SERVER contains a registering arrangement REG, a notifying arrangement NOT and an interrogating arrangement INT. The registering arrangement REG includes a service activation database ACT_REG and a service activation detector ACT_DET. The notifying arrangement NOT comprises a roaming detector DET, a notification generator and transmitter INFO_GEN/TX and a call hold instruction generator and transmitter CALL_HOLD. The interrogating arrangement INT contains a request generator and transmitter REQ_GEN/TX, a response receiver RESP_RX, and a call handle instruction generator and transmitter CALL_HANDLE.

The service activation detector ACT_DET interfaces with both the service activation database ACT_REG and the roaming detector ROAMING_DET. Outputs of the roaming detector ROAMING_DET are connected to inputs of the notification generator and transmitter INFO_GEN/TX and the call hold instruction generator and transmitter CALL_HOLD. The notification generator and transmitter INFO_GEN/TX is coupled to the request generator and transmitter REQ_GEN/TX via a control link and the just mentioned request generator and transmitter REQ_GEN/TX is further coupled to the response receiver RESP_RX via another control link. An output of the response receiver RESP_RX is connected to an input of the call handle instruction generator and transmitter CALL_HANDLE. The roaming detector ROAMING_DET, the notification generator and transmitter INFO_GEN/TX, the call hold instruction generator and transmitter CALL_HOLD, the request generator and transmitter REQ_GEN/TX, the response receiver RESP_RX and the call handle instruction generator and transmitter CALL_HANDLE interface, for instance via a signalling input/output port with the mobile switching centre MSC of the mobile communications network wherein the service centre SERVER is integrated. The roaming detector ROAMING_DET via signalling links further also interfaces with the location registration system VLR/HLR of the mobile communication system. In a GSM (Global System for Mobile communications) system, this location registration system consists of Home Location Registers HLR and Visitor Location Registers VLR.

The operation of the service centre SERVER when a call comes in is as follows. The mobile switching centre MSC of the mobile communication system informs the service centre SERVER that a call has to be set-up to the mobile destination terminal DT. The service activation detector ACT_DET thereupon consults the service activation database ACT_REG to determine whether the called party CALLED has activated the calling party notification service or not. If this calling party notification service is not activated, the service centre SERVER instructs the mobile switching centre MSC to set-up the call. If on the contrary the called party CALLED has activated the calling party notification service, the service activation detector ACT_DET instructs the roaming detector ROAMING_DET to find out whether the mobile destination terminal DT is roaming abroad or not. The roaming detector ROAMING_DET thereto consults the location registration system VLR/HLR of the mobile communications system. If the mobile destination terminal DT is not roaming abroad, the service centre SERVER instructs the mobile switching centre MSC to set-up the call to the mobile destination terminal DT. If on the other hand the mobile destination terminal is roaming abroad, the roaming detector ROAMING_DET instructs the notification generator and transmitter INFO_GEN/TX to inform the calling party CALLING that the mobile destination terminal DT is roaming abroad and instructs the call hold instruction generator and transmitter CALL_HOLD to temporarily interrupt establishment of the call towards the destination terminal DT. The call hold instruction generator and transmitter CALL_HOLD will not interrupt establishment of the call itself but will instruct the mobile switching centre MSC to do so via a message sent over the signalling channels between the call hold instruction generator CALL_HOLD and mobile switching centre MSC. The notification generator and transmitter INFO_GEN/TX composes an audible voice message telling that the destination is abroad and sends this message to the originating terminal OT where it is played back. The notification generator and transmitter INFO_GEN/TX in addition instructs the request generator and transmitter REQ_GEN/TX to ask the calling party CALLING whether it wishes to establish the connection with the mobile destination terminal DT now that it is informed that the destination terminal DT is roaming abroad. The request generator and transmitter REQ_GEN/TX thereto composes a second audible voice message requesting the calling party CALLING to press the 1-button in case it wishes to establish the connection and to push the 0-button or to hook-on in case it does not wish to establish the connection with the roaming destination terminal DT. This second audible voice message again is sent to the originating terminal OT and played back there for the calling party CALLING. The request generator and transmitter REQ_GEN/TX in addition instructs the response receiver RESP_RX to monitor the incoming line for the response of the calling party CALLING to the request just sent. As soon as the response is received, the response receiver RESP_RX interprets this received response and controls the call handle instruction generator CALL_HANDLE to generate an instruction for the mobile switching centre MSC telling the mobile switching centre MSC what to do with the connection put in hold. If the response receiver RESP_RX detects that the calling party CALLING has pushed the 1-button, it makes the call handle instruction generator CALL_HANDLE generate an instruction to continue establishment of the connection with the mobile destination terminal DT. If the response receiver RESP_RX detects that the calling party CALLING has pushed the 0-button or has hooked-on, it makes the call handle instruction generator CALL_HANDLE generate an instruction to terminate establishment of the call to the mobile destination terminal DT. The instruction generated by the call handle instruction generator CALL_HANDLE is sent to the mobile switching centre where it is carried out. Thus, the calling party CALLING in the described embodiment of this invention is informed that the called party CALLED is roaming abroad and is given control over establishment of the call to the mobile destination terminal DT. Only if the call is relevant and important, the calling party CALLING will request to establish the call to the mobile destination terminal DT irrespective of the international conversation costs that result from such a call. If the call is irrelevant or unimportant in view of the called party's being abroad, the calling party CALLING will request not to establish the call to the mobile destination terminal DT. In the latter case, only the conversation costs for the communication with the service centre SERVER will have to be paid.

It is remarked that although an audible voice message indicates in the above described embodiment to the calling party CALLING that the mobile destination terminal DT is roaming abroad, the scope of the present invention is not limited by any particular form of the notification that is sent towards the calling party CALLING. The calling party CALLING alternatively for example may be notified via an audible tune that the mobile destination terminal DT is abroad. This audible tune may be a tune similar to the one that nowadays indicates in telephone networks that the line towards the destination terminal is busy. Yet another way of notifying that the mobile destination terminal is roaming abroad is by transferring a displayable message to the terminal of the calling party CALLING, so that the calling party CALLING can read on the display of his/her fixed or mobile telephone terminal OT that the destination terminal DT is abroad. The notification may just indicate to the calling party CALLING that the mobile destination terminal DT is roaming abroad or may in addition specify in which area or country the mobile destination terminal DT is roaming, so that the calling party CALLING can estimate the conversation costs for an international call to the mobile destination terminal DT.

It is also noticed that in an alternative embodiment of the invention, the service centre SERVER may be simplified by omitting the interrogating arrangement INT described above. Indeed, if the calling party CALLING is notified that the mobile destination terminal DT is roaming abroad and the calling party CALLING is thereafter given a certain time interval to hook on before the connection with the mobile destination terminal DT is established, high international conversation costs for irrelevant or unimportant calls towards a roaming mobile destination terminal DT can also be avoided.

Also a remark is that the service centre SERVER has to interface with other elements of the mobile communication network GSM_NETWORK but not necessarily in the way described above. In the above described embodiment, the service centre SERVER interfaces with the mobile switching centre MSC of the mobile communications network via a signalling input/output port and similarly with the location registration equipment VLR/HLR in the mobile communications network. It is evident that the service centre SERVER alternatively may interface with other elements, e.g. the base station controllers, of the mobile communications network that are able to temporarily interrupt establishment of a call upon instruction of the service centre SERVER and that can inform the service centre SERVER about the location of the mobile destination terminal DT.

Yet another remark is that an activation registering arrangement REG such as described above, is not required in the service centre SERVER according to the present invention, in case the calling party notification service for instance is automatically activated by the mobile operator at the time of subscription for all subscribers.

Any skilled person in the art of mobile communications also will appreciate that the calling party notification service according to the present invention can be implemented in other mobile communications systems than a GSM (Global System for Mobile Communications) network. Minor modifications to the above described embodiment allow it to be integrated for example in a UMTS (Universal Mobile Telecommunications System) network, a GPRS (General Packet Radio Service) system, a DCS (Digital Communication Service) system, or alike.

Furthermore, it is remarked that an embodiment of the present invention is described above in terms of functional blocks. From the functional description of these blocks it will be obvious for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention.

## Claims

1. Calling party notification service for use in a mobile communications system in case a call is set-up from a fixed or mobile originating terminal (OT) to a mobile destination terminal (DT) roaming abroad,
CHARACTERISED IN THAT said calling party notification service includes detecting that said mobile destination terminal (DT) is roaming abroad, and informing said originating terminal (OT) that said mobile destination terminal (DT) is roaming abroad whilst at least temporarily interrupting establishment of said call.

2. Service centre (SERVER) for use in a mobile communications system,
CHARACTERISED IN THAT said service centre (SERVER) includes a calling party notification arrangement (NOT) comprising:
a. means (ROAMING_DET) for detecting that a mobile destination terminal (DT) is roaming abroad;
b. means (CALL_HOLD) for at least temporarily interrupting establishment of a call from a fixed or mobile originating terminal (OT) to said mobile destination terminal (DT) that is roaming abroad; and
c. means (INFO_GEN/TX) to generate information notifying that said mobile destination terminal (DT) is roaming abroad and to transmit said information towards said originating terminal (OT).

3. Service centre (SERVER) according to claim 2,
CHARACTERISED IN THAT said service centre (SERVER) further includes a calling party interrogation arrangement (INT) comprising:
d. means (REQ_GEN/TX) to generate a request to indicate that said call has to be established or not and to transmit said request towards said originating terminal (OT);
e. means (RESP_RX) to receive from said originating terminal (OT) a response indicating that said call has to be established or not; and
f. means (CALL_HANDLE) responsive to said response, to continue establishment of said call or to terminate establishment of said call.

4. Service centre (SERVER) according to claim 2 or claim 3,
CHARACTERISED IN THAT said service centre (SERVER) further includes a registration arrangement (REG) comprising:
g. means (ACT_REG) to register activation of a calling party notification service by a party (CALLED) using said mobile destination terminal (DT); and
h. means (ACT_DET) to detect activation of said calling party notification service whereto said calling party notification arrangement (NOT) is responsive.

5. Mobile destination terminal (DT) of a mobile communications system,
CHARACTERISED IN THAT said mobile destination terminal (DT) comprises means to activate a calling party notification service as defined in claim 1.

6. Fixed or mobile originating terminal (OT) able to set-up a call to a mobile destination terminal (DT) of a mobile communications network,
CHARACTERISED IN THAT said originating terminal (OT) comprises means to receive information notifying that said mobile destination terminal (DT) is roaming abroad.

7. Fixed or mobile originating terminal (OT) according to claim 6,
CHARACTERISED IN THAT said originating terminal (OT) further comprises means to receive a request to indicate that said call has to be established or not and means to transmit a response indicating that said call has to be established or not.

8. Mobile communications system,
CHARACTERISED IN THAT said mobile communications system comprises a service centre as defined in one of claims 2 to 4.
